# EUROPEAN PATENT SPECIFICATION

(11) **EP 1 972 644 B1**
(45) Date of publication and mention of the grant of the patent: **06.03.2013**
(21) Application number: 05783039.0
(22) Date of filing: 12.08.2005
(51) Int. Cl.: C08F 36/06, C08F 36/08, C08F 4/54, C08L 9/00

(54) **METHOD FOR PRODUCING CIS-1,4 DIENE RUBBER, CATALYST, RUBBER**
VERFAHREN ZUR HERSTELLUNG VON CIS-1,4-DIEN-KAUTSCHUK, KATALYSATOR, KAUTSCHUK
PROCEDE DE PRODUCTION DE CAOUTCHOUC CIS-1,4-DIENIQUE, CATALYSEUR, CAOUTCHOUC

(43) Date of publication of application: 24.09.2008
(73) Proprietor: Otkrytoe Aktsionernoe Obschestvo 'Efremovsky Zavod Sinteticheskogo Kauchuka', Tulskaya obl. 301840 (RU)
(72) Inventor: ZABORITSOV, Valery Nikolaevich, Tulskaya obl., 301840 Efremov (RU); BELIKOV, Vladimir Anatolievich, Tulskaya obl., 301840 Efremov (RU); RYAKHOVSKY, Valery Sergeevich, Tulskaya obl., 301840 Efremov (RU); MARKOV, Boris Alesandrovich, Tulskaya obl., 301840 Efremov (RU); SHARYGIN, Petr Vasilievich, Tulskaya obl., 301840 Efremov (RU)
(74) Representative: Benatov, Emil Gabriel
(86) International application number: PCT/RU2005/000427
(87) International publication number: WO 2007/021215

(56) References cited:
- EP-A1- 1 092 735
- RU-C1- 2 087 488
- RU-C1- 2 087 488
- RU-C1- 2 109 753
- RU-C1- 2 109 753
- RU-C1- 2 119 499
- RU-C1- 2 127 280
- RU-C1- 2 203 289
- RU-C1- 2 203 289
- RU-C2- 2 206 577
- US-A- 4 461 883
- US-A1- 2004 102 589

## Description

The invention relates to the method for production of diene rubber using the Ziegler-Natta catalytic systems, to the catalyst used for production of rubber and to the rubber obtained by this method, and the method can be used in the synthetic rubber industry, whereas obtained polymer can be used in rubber product and tyre industries.

### Background of the invention

The methods for production of cis-1,4-polybutadiene and butadiene-isoprene copolymer under the action of catalytic systems based on rare-earth metals have been known (DE application no. 2830080, 1984; US patent no. 4461883, 1984).

It is known that lanthanide metal salts together with alkylmetal compounds of 1-3 basic group metals of the Periodic Table of elements in the presence of halide-containing reagents can form active catalytic systems for polymerization reaction of both olefin and diolefin monomers by means of the Ziegler-Natta catalysts.

These systems pertain to the most stereospecific and active systems for butadiene 1,4-cis-polymerization, whereas elastomers obtained possess higher mechanical characteristics than the polybutadienes synthesized by means of other catalytic systems.

The extensive list of instances of the ternary catalytic systems based on lanthanide metal salts is available from G.Allen and J.C. Bevington book "Comprehensive polymer science", 1989, volume 4, chapter 5, p.53, published by Pergamon Press.

Other especially detailed mentions can be found in papers which have occurred in journals "Inorganic chemistry", 1987, volume 130, p. 125 and "Polymer", 1988, volume 29, p.1516.

As it is well-known in this field of technique, lanthanide group metal is that of the group comprising scandium, atomic number 21, yttrium, atomic number 39, and/or the metal, which atomic number is between lanthanum (57) and lutecium (71). These metals relate to the IIIA group of Periodic Table of elements according to the JUPAC definition accepted up to 1985.

As to patents, it is a real fact that the ternary catalytic systems based on lanthanides have been presented in German patents DE 1.812.935, DE 2.833.721, DD 243.034.

In most above-stated cases, catalyst systems have directly been prepared by mixing three components at the presence of an unsaturated compound to be polymerized, i.e., by the method known to the persons skilled in the art as the "in situ" method for preparation of a catalytic mixture.

Other known way includes preparation of a catalytic mixture in a suitable solvent (preliminary formation), and a successive contact of the resulted solution or suspension to a solution of unsaturated compound to be polymerized. In the latter case, it is possible that the catalytic mixture preliminarily formed can be aged for a fixed time prior to its contact to an unsaturated monomer to be polymerized.

Other method involves the rare-earth catalytic system for preparation of polybutadiene having the unimodal molecular-weight distribution (Mw/Mn = 3-3.5) and the high cis-1,4 unit content (Rare-earth catalytic system and butadiene polymerizing process, CN 1347923, 2002-05-08).

Another work discloses the method for preparation of cis-1,4-polybutadiene and the catalyst based on neodymium carboxylate and a mixture (as cocatalyst) of alkylaluminums and alkylaluminum hydrides, halide-containing compounds and butadiene. Molecular weight of polymer and its molecular-weight distribution are controlled by changing a ratio of two types of alkylaluminum compounds. (Rare-earth catalyst system and its catalytic polymerizing process for butadiene CN 1342719, 2002-04-03). The system consists of neodymium carboxylate, alkylaluminum hydride or trialkylaluminum, halogenide and conjugated diene in the ratio: 1 : 5-50 : 0.5-5 : 5-30.

Another USA patent 4575538, 1986 describes diolefin polymerization in the presence of an alkylation agent in a hydrocarbon solvent and a catalyst solution containing lanthanide complex where lanthanide has an atomic number 57-71, halogen and ligand (alkyl ether).

The USA patent 4429089, 1983 discloses butadiene polymerization in the battery consisting of six polymerizers, where a charge is fed, which the charge is a toluene solution of butadiene and a catalyst complex based on rare-earth metal compound and organoaluminum compound.

Disadvantage of this method is that resulted cis-1,4-polybutadiene is characterized by high plasticity and cold flow. High cold flow does not allow one to conserve polymer briquette forms with a sufficient degree of reliability in transportation of polymer to an user, whereas increased plasticity needs additional expenses to extract polymer from a solution.

Patent RU 2151777, 27.06.2000 shows the method for preparation of cis-1,4-polybutadiene by butadiene polymerization in a hydrocarbon solvent using catalyst systems based on lanthanide compounds and organoaluminum compounds, and a catalyst complex is continuously formed and fed into the polymerizing battery by mixing components within a conduit. The method provides more uniform product in quality, however does not allow one to produce the rubber with a necessary molecular-weight distribution.

Thus, disadvantage of all above-stated methods to prepare cis-1,4-diene rubbers, as well as catalyst systems used in polymerization, is a rather wide molecular-weight distribution (MWD) and, consequently, rather low physical-mechanical characteristics of the rubber prepared from polybutadiene obtained.

The most similar method to the present invention in technical features is the method described in RU 2109753, 27.04.1998 for preparation of diene rubber by diene polymerization in aromatic solvent in the battery of more than three successive reactors using rare-earth elements of lanthanide series as the Ziegler-Natta catalyst followed by stopping, washing, degassing, and dehydration of polymer; butadiene or its mixture with isoprene is used as diene; the whole charge - a diene solution in an aromatic solvent - is portionwise added into first two downstream reactors, and 1-90 wt % of a charge is added to the first reactor, or into first three reactors, and 1-80 wt % of a charge is added to each reactor; a catalyst is fed into the first downstream reactor or portionwise into the first or third reactors or into the first or second reactors, and 1-9 wt % of total lanthanides is added to the first reactor.

The catalyst according to the known method was prepared as follows.

In order to prepare a catalyst complex, a solution of alpha-branched monocarboxylic acid neodymium salt is charged into the apparatus fitted with a stirrer, in which apparatus an isobutylaluminum sesquichloride (IBASC) toluene solution, piperilene (1-methyl-butadiene), and a triisobutylaluminum (TIBA) toluene solution is successively added. The reaction mixture of the apparatus is agitated to give a suspension of a catalytic rare-earth element (REE) complex. Butadiene polymerization is carried out in the battery of six polymerizers where a charge consisting of a toluene solution of butadiene and a catalyst complex suspension is fed. The butadiene : REE molar ratio is 15000. The monomer conversion in the sixth polymerizer was 92 wt %. Chain termination of polymerization process is carried out with an antioxidant (Agidol-2) solution. Washing of polymerizate is carried out with partially softened water. After extraction and drying polymer has following characteristics: Mooney viscosity is 45 units, Karrer plasticity - 0.61 units, elastic recovery - 0.67 mm, the cold flow - 27.9 mm/h, and the 1,4-cis-unit content - 95 %.

Disadvantage of the prototype is that cis-1,4-polybutadiene (as well as cis-1,4-polyisoprene and cis-1,4-butadiene-isoprene copolymer) prepared according to the described method is also characterized by the rather wide MWD. It results in lowering of physical-mechanical characteristics of rubber.

### Summery of the invention

The primary object of the invention is to obtain cis-1,4-polybutadiene, cis-1,4-polyisoprene, and cis-1,4-butadiene-isoprene copolymer under the action of REE-based catalysts, which polymers have a narrow molecular-weight distribution and high physical-mechanical characteristics, first of all, a high conventional stress at 300% strain (modulus at 300%) of the vulcanized rubber based on the elastomer obtained.

The object is attained owing to that butadiene polymerization and copolymerization with isoprene, as well as isoprene polymerization, in the present method is carried out in the battery of five polymerizers (it is also possible that process is carried out in three-six polymerizers), monomer(s) being fed portionwise.

First of all, 1-99% of total monomer(s) as a charge, i.e. a diene solution in a solvent (for example, toluene, hexane), is fed into the first downstream reactor and then into the successive second or third reactors with supply 1-99 wt % of residual monomer(s), used in the process, based on their total amount into each of reactors. The catalyst is added to only the first downstream reactor. As a rule, the monomer introduced into the second and third reactors is either solvent-free or the solvent is fed into the third and subsequent reactors, and the solvent is fed into in the third reactor separately from monomer. Moreover, the addition of trialkylaluminum, dialkylaluminum hydride, or tetraisobutyldialumoxane hydrocarbone solution or their mixtures is assumed to be simultaneous with monomer to the first, second, or third reactor. The hydrocarbon solvent with temperature from -25°C to +140°C can also be fed simultaneously, but not together with the monomer, entering into the third or subsequent reactors.

cis-1,4-Polybutadiene, cis-1,4-polyisoprene, and cis-1,4-butadiene-isoprene copolymer prepared according to the present method are characterized by the narrow MWD and the increased modulus at 300% strain of rubbers on their bases.

The stated invention includes also the catalyst for diene (co)polymerization in preparation of cis-1,4-diene rubber as an independent object of the invention.

The catalyst for diene (co)polymerization in preparation of cis-1,4-diene rubber in hydrocarbon solvent represents the Ziegler-Natta catalytic complex prepared by interaction of hydrocarbon solutions of: compounds based on rare-earth elements (REE) of lanthanide series having atomic number 57-71 of Periodic Table, conjugated diene monomer, halide-containing compound (HC), and organoaluminum compound (OAC), involving OAC hydrides; the complex is formed continuously (by mixing components in a conduit) or batchwise (in separate apparatuses), and OAC contains polyalkylalumoxane, tetraisobutyldialumoxane, fine aluminum dispersion, aluminum hydrides and hydrogen simultaneously or in different combinations; and variation in OAC composition allows one to control molecular characteristics of a desired product (product quality).

The said catalytic complex is prepared continuously, for example, by mixing components in a conduit, whereas the lengths of conduit sections, through which the next component of a catalytic complex is introduced, are determined by the interaction time of components and their consumption.

In particular, the lengths of conduit sections are chosen so as to provide a necessary residence time and a maximal consumption of components. If it is necessary to control and decrease monomer feeding, a contact time of components increases, and this does not affect a quality of a catalyst complex.

Catalyst complex is also prepared batchwise in separate apparatuses.

The invention also include cis-1,4-diene rubber that is a (co)polymer of conjugated dienes having a high cis-1,4-unit content and a narrow molecular-weight distribution, and which (co)polymer was prepared according to the method of the present invention.

Thus, the present invention discloses the method for preparation of cis-1,4-polydienes in the presence of the catalyst prepared by interacting of various rare earths (REE) with halide-containing compound (HC), organometallic compound (OMC), preferably organoaluminum compound (OAC) and a compound of formula R¹R²R³Al (3), where R1 is a hydrocarbon radical, OAlR⁴2 or H; R², R³, and R⁴ is a hydrocarbon radical. Also the mixtures of dialkylaluminum hydride, trialkylaluminum, tetraalkyldialumoxane, or polyalkylalumoxane or the same compounds can be used individually or separately in different steps of polymerization process.

Complexation of the above compounds occurs in the presence of the conjugated diene. Butadiene , piperylene, isoprene or their mixtures are used as monomer.

As REE carboxylate compounds preferably Nd, Pr, Gd, and Ce salts of saturated alpha-branched C5-C20 carboxylic acids, or naphthenic, 2-ethylhexanoic, and neodecanoic acids are used.

It is also possible to use following components of a catalyst complex based on rare-earth elements (REE):
REE alkoxide (I), or
REE carboxylate (II), or
REE diketonate (III) and/or
REE halogenide with electron-donor atom (oxygen, nitrogen) of following formulas:

   (RO)3(M) (I). RCOO)3M (II).

   (RCOCHCOR)₃ (III)

   EX3 * donor (IV),
where E designates a trivalent rare-earth element of Periodic Table with an atomic number from 57 to 71, R is C1-C10 alkyl, X represents chlorine, bromine, or iodine,

Except for the presented examples, the present method assumes using following REE derivatives: lanthanum (III) chloride with tributyl phosphate, lanthanum (III) chloride with tris(2-ethylhexyl) phosphate, lanthanum (III) chloride with tetrahydrofuran, lanthanum (III) chloride with isopropanol, lanthanum (III) chloride with pyridine, lanthanum (III) chloride with 2-ethylhexanol, lanthanum (III) chloride with ethanol, praseodymium (III) chloride with tributyl phosphate, praseodymium (III) chloride with tetrahydrofuran, praseodymium (III) chloride with isopropanol, praseodymium (III) chloride with pyridine, praseodymium (III) chloride with 2-ethylhexanol, praseodymium (III) chloride with ethanol, neodymium (III) chloride with tributyl phosphate, neodymium (III) chloride with tris(2-ethylhexyl) phosphate, neodymium (III) chloride with tetrahydrofuran, neodymium (III) chloride with isopropanol, neodymium (III) chloride with pyridine, neodymium (III) chloride with 2-ethylhexanol, neodymium (III) chloride with ethanol, lanthanum (III) bromide with tributyl phosphate, lanthanum (III) bromides with tetrahydrofuran, lanthanum (III) bromide with isopropanol, lanthanum (III) bromide with pyridine, lanthanum (III) bromide with 2-ethylhexanol, lanthanum (III) bromide with ethanol, praseodymium (III) bromide with tributyl phosphate, praseodymium (III) bromide with tetrahydrofuran, praseodymium (III) bromide with isopropanol, praseodymium (III) bromide with pyridine, praseodymium (III) bromide with 2-ethylhexanol, praseodymium (III) bromide with ethanol, neodymium (III) bromide with tributyl phosphate, neodymium (III) bromide with tetrahydrofuran, neodymium (III) bromide with isopropanol, neodymium (III) bromide with pyridine, neodymium (III) bromide with 2-ethylhexanol, and neodymium (III) bromide with ethanol, preferably lanthanum (III) chloride with tributyl phosphate, lanthanum (III) chloride with pyridine, lanthanum (III) chloride with 2-ethylhexanol, praseodymium (III) chloride with tributyl phosphate, praseodymium (III) chloride with 2-ethylhexanol, neodymium (III) chloride with tributyl phosphate, neodymium (III) chloride with tetrahydrofuran, neodymium (III) chloride with 2-ethylhexanol, neodymium (III) chloride with pyridine, neodymium (III) chloride with ethanol, as well as carboxylates:
including: lanthanum (III) propionate, lanthanum (II) diethylacetate, lanthanum (III) 2-ethylhexanoate, lanthanum (III) stearate, lanthanum (III) benzoate, lanthanum (III) cyclohexanecarboxylate, lanthanum (III) oleate, lanthanum (III) versatate, lanthanum (III) naphthenate, praseodymium (III) propionate, praseodymium (III) diethylacetate, praseodymium (III) 2-ethylhexanoate, praseodymium (III) stearate, praseodymium (III) benzoate, praseodymium (III) cyclohexanecarboxylate, praseodymium (III) oleate, praseodymium (III) versatate, praseodymium (III) naphthenate, neodymium (III) propionate, neodymium (III) diethylacetate, neodymium (III) 2-ethylhexanoate, neodymium (III) stearate, neodymium (III) benzoate, neodymium (III) cyclohexanecarboxylate, neodymium (III) oleate, neodymium (III) versatate, and neodymium (III) naphthenate, preferably neodymium (III) 2-ethylhexanoate, neodymium (III) versatate, and neodymium (III) naphthenate, and also rare-earth (III) compositions based on diketonates, including: lanthanum (III) acetylacetonate, praseodymium (III) acetylacetonate, and neodymium (Π1) acetylacetonate, preferably neodymium (III) acetylacetonate.

Preferably, compounds of formula R5mAlHa13-m, where m =0; 1; 1,5; 2, R5 is C1-C4 alkyl, Ha1 is halogenide: C1, Br or F, are used as compounds (2). Following compounds can be used:
Methylaluminum dibromide, methylaluminum dichloride, ethylaluminum dibromide, ethylaluminum dichloride, butylaluminum dibromide, butylaluminum dichloride, isobutylaluminum dibromide, diisobutylaluminum bromide, isobutylaluminum sesquibromide, isobutylaluminum sesquichloride, dimethylaluminum bromide, dimethylaluminum chloride, diethylaluminum bromide, diethylaluminum chloride, dibutylaluminum chloride, methylaluminum sesquibromide, methylaluminum sesquichloride, ethylaluminum sesquibromide, ethylaluminum sesquichloride, aluminum tribromide, aluminum trichloride, dimethylaluminum fluoride, diethylaluminum fluoride, methylaluminum difluoride, ethylaluminum difluoride, and also halogenides of other elements of Periodic Table: antimony trichloride, antimony pentachloride, phosphorus trichloride, phosphorus pentachloride, tin tetrachloride, titanum tetrachloride, titanum tetrabromide, titanum tetraiodide, the mixed titanum halogenides with chlorine, iodine, and bromine atoms, etherates of aluminum chloride, aluminum bromide, boron trifluoride, and titanum tetrachloride.

It is also possible to use various alkyl and aryl halogenides, mono or polyhalogenoderivatives both alone and separately and in a combination with OMC (OAC).

The most suitable organoaluminum compounds (OAC) (3) include trialkylaluminum compounds, dialkylaluminum hydrides and/or alumoxanes of general formulas: AIR3(V), HAIR2 (VI), R(AIO)nAIR3 (VII).

As compounds (3) the mixtures containing > 1 compound of a series: diisobutylaluminum hydride (DIBAH), triisobutylaluminum (TIBA), tetraisobutyldialumoxane (TIBDAO). (compound VII, where n = 2) and their mixes are mainly used.

In addition following compounds can be used: trimethylaluminum, triethylaluminum, tri-n-butylaluminum, triisobutylaluminum, tri-n-propylaluminum, triisopropylaluminum, tripentylaluminum, tri-n-hexylaluminum, tri-n-octylaluminum, tricyclohexylaluminum, triphenylaluminum, tri-p-tolylaluminum, tribenzylaluminum, diethylphenylaluminum, diethyl-o-tolylaluminum, diethylbenzylaluminum, ethyldiphenylaluminum, ethyldi-p-tolylaluminum, ethyldibenzylaluminum, diethylaluminum hydride, di-n-propylaluminum hydride, diisopropylaluminum hydride, di-n-butylaluminum hydride, diisobutylaluminum hydride, di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride, ethylaluminum dihydride, n-propylaluminum dihydride, isopropylaluminum dihydride, n-butylaluminum dihydride, isobutylaluminum dihydride, n-octylaluminum dihydride, as well
dimethylaluminum methoxide, diethylaluminum methoxide, diisobutylaluminum methoxide, dimethylaluminum ethoxide, diethylaluminum ethoxide, diisobutylaluminum ethoxide, dimethylaluminum phenoxide, diethylaluminum phenoxide, diisobutylaluminum phenoxide, methylaluminum dimethoxide, ethylaluminum dimethoxide, isobutylaluminum dimethoxide, methylaluminum diethoxide, ethylaluminum diethoxide, isobutylaluminum diethoxide, methylaluminum diphenoxide, ethylaluminum diphenoxide, isobutylaluminum diphenoxide, and their mixtures.

Triisobutylaluminum (TIBA) and diisobutylaluminum hydride (DIBAH) are preferable compounds.

Besides hydrocarbons represented in examples, suitable hydrocarbons as solvents can include: linear and branched, aliphatic and cyclic, saturated or unsaturated or aromatic hydrocarbons, for example, C5-C35 alkanes, such as n-pentane, isopentane, cyclopentane, n-hexane, isohexane, cyclohexane, n-heptane, isoheptane, n-octane, isooctane, nonane, decane or undecane; C5-C35 alkenes, such as pentenes, cyclopentenes, hexene, cyclohexene, heptene, octene, nonene, decene, or undecene; as well unconjugated dienes, such as 1,4-pentadiene, hexadiene, cyclohexadiene, heptadiene, octadienes or octatrienes, nonadienes or nonatrienes; or aromatic hydrocarbons, such as benzene, toluene, xylene. Aliphatic hydrocarbons are preferable, however, aromatic hydrocarbons, for example, toluene, are preferable from the safety viewpoint.

As a conjugated diene (4), piperylene, 1,3-butadiene or isoprene are used in preparation of a catalyst complex. 1,3-Butadiene or isoprene or their mixtures are used as comonomers.

The most preferable (1)-to-(2) ratio is 1.5-3.0 g/at at (per). Components (3) and (4) are mainly used in amount of 2-20 moles, respectively. Catalyst activity and qualitative (co)polymer characteristics depend on these ratios.

Aliphatic or aromatic hydrocarbons are mainly used as a solvent in the present application. Polymerization is carried out at 20-80°C, preferably at 30-60°C. After the polymerization battery, a polymer solution (polymerizate) obtained is subjected to stopping, antioxidant charging, and washing to remove decomposition products of a catalyst complex. Stopping and washing stages are usually combined because water and antioxidant both simltaneously are stopping agents and both agents are fed unto a single apparatus. Separation of the stopping stage from the stage of polymer stabilization with an antioxidant or change in an order of these steps both are possible, however, this does not play a decision role for the present method.

Washing is carried out with a potassium alkali or sodium alkali aqueous solution with simultaneous or subsequent optional introduction of various additives (reagents, for example, such as: a) antiagglomerating agent, such as sodium, potassium, calcium or magnesium stearate, or Sulfonol, or Styromal potassium-calcium salt, alkyldimethylbenzylammonum chloride; b) processing additives, such as hydroxyethylidene diphosphonic acid, or Trilon B, or oxalic or phosphoric acids, etc.), and additional additives (reagents) can be introduced not only in polymerizate stopping and washing steps, but also in successive steps, for example, in circulating water before its feeding into a degasser or directly in degassing step.

Polymerizate is then supplied in an aqueous degassing step where all the aforesaid additional reagents can also be introduced, and this allows one to control pH of a medium, an extraction degree of components of a catalyst complex, and some characteristics of elastomer. The rubber crumb obtained in aqueous degassing step enters in a vibratory sieve, and is separated from circulating water. The rubber is dried in screw squeezing machines, in a vibratory drier, and supplied to packing.

The essence of the present invention and its advantage in comparison with a control example and the prototype (Example 1) are disclosed in Examples 2-27.

### The detailed description of the invention

The said technical result is attained by that in the offered method the preparation of cis-1,4-polybutadiene, cis-1,4-polyisoprene, and cis-1,4-butadiene-isoprene copolymer is carried out as follows.

Example (control). In general, 1,3-butadiene (isoprene) polymerization and their copolymerization is carried out in the battery of 3-6 successive reactors in a toluene hydrocarbon solvent (as well hexane, isopentane or their mixtures and other aforementioned hydrocarbons) in the presence of a catalyst system, consisting of various lanthanide salts of or lanthanides having various ligands, halide-containing compounds (HCC), diene and organometallic compound (OMC), preferably organoaluminum compound (OAC), for example, triisobutylaluminum (TIBA), containing alkylaluminum hydride, for example, diisobutylaluminum hydride (DIBAH). The latter is a chain length regulator of elastomer and can be introduced separately or together with OAC at various steps of polymerization process.

More specifically.

In order to prepare a catalytic complex, the apparatus of 2 m3 in volume, equipped with a stirrer, is charged at stirring in a nitrogen atmosphere with 2-ethylhexanoic acid neodymium salt (60 l, 15.0 mol), to which piperylene (150 mol) and triisobutylaluminum (TIBA) toluene solution (1395 l, 300 mol), isobutylaluminum sesquichloride (IBASC) toluene solution (45 mol), piperylene (150 mol), and triisobutylaluminum (TIBA) toluene solution (1395 l, 300 mol) are added. The reaction mixture is agitated for 24 hours at 35°C to give the suspension of a catalyst complex having 0.01 mol/I rare earth element (REE) concentration.

The ratio of complex components REE: piperylene : TIBA: IBASC = 1 :20 : 20 : 3 (molar). In the three-reactor polymerization battery, 1,3-butadiene (3 t/h) as a monomer and toluene solvent (25 t/h) are continuously fed. The dosage of the catalyst complex to the first reactor is 0.35 moles of Nd/100 kg/h of butadiene. As usual, polymerization time is 3 hours at temperature 32°C, until the monomer conversion is 98 wt % (90 wt % in this case), and the process is then terminated by adding the HG-2246 antioxidant [2,2'-methylene-bis(4-methyl-6-tert-butylphenol] (other company names are Vulcanox, Lavinox, Naftanox, Agidol 2, AO-123, and AO-300, which contain from 55 to 100 wt % of the said compound) in amount of 0.5 kg per 100 kg of rubber (0.5 wt %) and washed off with water. Any other known and suitable antioxidants can also be used; in this case it does not play a decision role. Potassium alkali is used as an additional reagent to increase an extraction extent of destruction products of a catalytic complex from polymerizate. Therefore, in washing 1 kg of 5% potassium alkali solution per every 100 kg of polymer is used. There is no basic difference between using potassium or sodium alkali in the present method. (Practically, the use of any alkali depends only on its presence in a warehouse of the factory.). It is also possible to use acids, such as hydrochloric acid, sulfuric acid and others.

The stopped and washed polymerizate (29 t/h) then enters in the aqueous degassing step, where a solvent is removed at temperature 100-110°C, and final washing of polymerizate from catalyst rests occurs. The resulted rubber crumb is then separated from water, dried and packed. The circulating water then enters in the unit to isolate individual components from water and use them in following preparation of a catalyst complex.

The monomer conversion in the last apparatus is 90 wt%. The characteristics of the rubber obtained: Mooney viscosity is 55 units, and the 1,4-cis-unit content is 96.1%. Molecular characteristics: Mw = 462000, Mn = 110000, Mw/Mn = 4.2. When testing the vulcanized rubbers obtained from this rubber, results were: the conventional stress at 300% strain is 6.7 MPa, and the tensile strength is 18.5 MPa.

### Example 1 (comparative).

In order to prepare a catalytic complex, the apparatus of 2 M3 in volume, equipped with a stirrer, is charged in a nitrogen atmosphere with alpha-branched monocarboxylic acid neodymium salt solution, {[C2C4)n(CH3)(C4H9)]C-COO}3Nd, where n = 1-6, (60 l, 16.2 mol), to which with stirring isobutylaluminum sesquichloride (IBASC) toluene solution (28.7 l, 40.3 mol of chlorine), piperylene (16.2 l, 162 mol), and triisobutylaluminum (TIBA) toluene solution (1674 l, 324 mol), containing diisobutylaluminum hydride (DIBAH) (32 wt %) are successively added. The reaction mixture is agitated for 12 hours at 25°C to give a catalyst complex having 0.0091 mol/I rare earth element (REE) concentration. The ratio of complex components REE : IBASC : piperylene : TIBA = 1 :2.5 (in chlorine) : 10 : 20 (molar).

Butadiene polymerization is carried out in the six-polimerizer battery, where the charge (30 t/h) is fed, which the charge contains 10 wt % butadiene solution (3 t/h, 55555.55 mol/h) in toluene (27 t/h) and a catalyst complex suspension (407 l/h (3.7 mol of REE/h)). The molar ratio butadiene: REE = 55555.55 mol/h : 3.7 mol/h = 15015. Total polymerization time is 5 hours. Polymerization temperature is 30°C:

The monomer conversion in the sixth polymerizer is 92 wt %. Polymerization process is terminated with an antioxidant solution (0.5 wt % of Agidol-2). Washing of polymerizate is carried out with partially softened water using the 1:1 ratio. After isolation and drying polymer has following characteristics: Mooney viscosity is 47 units, Karrer plasticity is 0.55 units, and the 1,4-cis-unit content is 97.2 wt %. Mw = 340600, Mn = 131000, Mw/Mn = 2.6. Strength characteristics of polymer are presented in Table 2.

Example 2. The preparation of a catalyst complex based on REE is carried out as in an Example 1. The component ratio of complex REE : IBASC : butadiene : TIBA = 1 : 0.5 (in chlorine) : 30 : 12 (molar). A hexane fraction is used as a solvent.

Unlike Example 1 a TIBA toluene solution containing diisobutylaluminum hydride (32 wt %), TIBDAO (2 wt %) and aluminum metal as the dispersion having particle size of 5-150 microns (1.07% based on TIBA weight) is used.

Unlike Example 1 butadiene polymerization is carried out in the five-polymerizer battery, and the charge (30 t/h, 0.3 t/h of butadiene) is fed into the first downstream apparatus of the polymerization battery using 1 wt % monomer concentration of a charge. The catalyst complex is also fed into the first reactor using 0.123 mol of Nd/100 kg/h of butadiene (or 3.69 mol/h per total monomer feed (3.0 t/h = 55555.55 mol/h)). Then butadiene (1.5 t/h, solvent-free) is then fed into the second reactor (this together with a monomer feed into the first reactor is 60 wt % of a total monomer feed), whereas a residual monomer (1.2 t/h) is fed into the third reactor. Therefore, 10% is fed into the first reactor, 50% into the second reactor, and 40% into the third reactor, based on a total monomer introduced. The process of polymerization proceeds further in two subsequent polymerizers of the battery. Temperature of polymerisation process is 37°C. The monomer conversion in the last polymerizer is 96 wt %. Termination of the polymerization process and polymerizate washing are carried out by simultaneous supply of the Agidol 2 antioxidant (0.5 wt %) and water (50 l/h). The molar ratio butadiene : REE = 55555,55 mol/h : 3.69 mol/h = 15055.

After isolation and drying polymer has following characteristics: Mooney viscosity is 47 units, Karrer plasticity is 0.55 units, and the 1,4-cis-unit content is 97.2 wt %. Mw = 340600, Mn = 131000, Mw/Mn = 2.6. Strength characteristics of polymer are presented in Table 1.

Example 3. Unlike Example 2 neodymium naphthenate as a hexane solution is used in preparation of a catalyst complex instead of an alpha-branched monocarboxylic acid neodymium salt. The component ratio of the complex REE : IBASC : isoprene : TIBA = 1 : 3.5 (in chlorine): 30 : 15 (molar). A charge (27 t/h) containing monomer (10 wt %, 2.7 t/h), the rest is toluene, is fed into the first apparatus of the polymerization battery (90 wt % of total monomer). Remaining solvent-free butadiene (0.3 t/h) is fed into the second reactor. Temperature of polymerization process is 60°C. The monomer conversion in the last apparatus is 98 wt %. Termination of the polymerization process and polimerizate washing is carried out as in the Example 2. Properties of the obtained polymer: Mooney viscosity is 44 units, Karrer plasticity is 0.49 units, and the 1,4-cis-unit content is 97.0 wt %. Mw = 378000, Mn = 135000, Mw/Mn = 2.8. Strength characteristics of polybutadiene are presented in Table 1.

Example 4. Unlike Example 2 neodymium 2-ethylhexanoate is used in preparation of a catalyst complex instead of an alpha-branched monocarboxylic acid neodymium salt. Moreover, butadiene-isoprene copolymer is prepared instead of polybutadiene.

In order to prepare a catalytic complex, the apparatus of 2 m3 in volume, equipped with a stirrer, is charged in a nitrogen atmosphere with 2-ethylhexanoic acid neodymium salt (60 l, 15.0 mol), to which with stirring isobutylaluminum sesquichloride (IBASC) toluene solution (25.8 l, 37.5 mol of chlorine), piperylene (15.0 l, 150 mol) and triisobutylaluminum (TIBA) toluene solution (1395 l, 300 mol), containing diisobutylaluminum hydride (DIBAH) (26.9 mol % of total aluminum) and tetraisobutyldialumoxane (TIBDAO) (14.1 mol % of total aluminum), and aluminum metal (0.3 wt %) as a homogeneous dispersion of 2-20 µ in particle size are successively added. The reaction mixture is agitated for 24 hours at 25°C to give a catalyst complex having 0.01 mol/I rare earth element (REE) concentration.

The ratio of complex components REE : IBASC : piperylene : TIBA = 1 : 1 (in chlorine) : 20 : 10 (molar). Dosage of the catalytic complex fed into the first reactor is 0.1 mol of Nd/100 kg/h of butadiene (based on total monomer feeding). The solvent is toluene. The charge (29.7 t/h) that is 10 wt % toluene solution of butadiene (2.97 t/h) is fed into the first reactor of the polymerization battery. The residual monomer (0.03 t/h of isoprene) is fed into the third reactor.

Therefore, butadiene (99% of total monomers) is fed into the first reactor, whereas isoprene (1% of total monomers) is fed into the third reactor. Temperature of polymerization process is 40°C. The total conversion of monomers in the last apparatus is 93 wt %. Termination of the polymerization process and polimerizate washing is carried out simultaneously by adding alkaline water (120 l/h) and a Wingstay L antioxidant (0.4 wt %). Properties of the obtained butadiene-isoprene copolymer after isolation and drying: Mooney viscosity is 44 units, Karrer plasticity is 0.53 units, and the 1,4-cis-unit content is 96.4 wt %. Mw = 351000, Mn = 130000, Mw/Mn = 2.7.

Example 5. A butadiene-isoprene copolymerization under the action of a REE-based catalyst complex is carried out as in Example 2, but, unlike Example 2, in preparation of a catalyst complex neodymium neodecanoate is used instead of an alpha-branched monocarboxylic acid neodymium salt. The ratio of complex components REE : IBASC : piperylene : TIBA = 1 : 2.0 (in chlorine) : 100 : 11 (molar). Dosage of the catalytic complex fed into the first reactor is 0.25 mol of Nd/100 kg/h of butadiene (based on total monomer feeding). The charge (20 t/h) containing butadiene monomer (2.0 t/h) is fed into the first reactor of the polymerization battery, isoprene comonomer (400 kg/h) is fed into the second reactor, and additional butadiene (600 kg/h) is further fed into the third reactor. Additional toluene (9 t/h) is fed into the fourth reactor. Thus, hydrocarbon solvent with temperature +140°C is fed into the fourth reactor simultaneously with the monomers fed in the second and third reactors. Temperature of the polymerization process is 36°C. The monomer conversion in the last apparatus is 94 wt %. After isolation and drying triblock cis-1,4-copolymer of butadiene with isoprene has following characteristics: Mooney viscosity is 47 units, Karrer plasticity is 0.46 units, and the 1,4-cis-unit content is 95.8 wt % of butadiene and isoprene. Mw = 388000, Mn = 155000, Mw/Mn = 2.5.

Example 6 differs from Example 5 in that isoprene (450 kg/h) is introduced into the third reactor, and butadiene (550 kg/h) is added to the second reactor. TIBA (0.03 mol per 100 kg of total monomers) is added to toluene fed into the fourth reactor. After isolation and drying diblock cis-1,4-copolymer of butadiene with isoprene has following characteristics: Mooney viscosity is 47 units, Karrer plasticity is 0.6 units, and the 1,4-cis-unit content is 97.1 wt % of butadiene and isoprene. Mw = 306000, Mn = 133000, Mw/Mn = 2.3.

Example 7A (control in isoprene and butadiene mixture) differs from Example 1 in that isoprene (350 kg/h) together with butadiene is introduced into the charge fed into the first reactor. Temperature of polymerization process is 30°C. The monomer conversion is 97 wt %. Obtained statistical cis-1,4-copolymer of butadiene with isoprene has following characteristics: Mooney viscosity is 54 units, Karrer plasticity is 0.5 units, and the 1,4-cis-unit content is 97.1 wt % of butadiene and isoprene. Mw = 379000, Mn = 99500, Mw/Mn = 3.8.

Example 7 differs from Example 5 in that isoprene (350 kg/h) is introduced together with a main butadiene stream into the charge fed into the first reactor, and 100% (solvent-free) butadiene (450 kg/h) is fed into the second reactor, and 200 kg/h in the third reactor. Temperature of the polymerization process is 42°C. The monomer conversion is 98 wt %. Obtained statistical cis-1,4-copolymer of butadiene with isoprene has following characteristics: Mooney viscosity is 44 units, Karrer plasticity is 0.52 units, and the 1,4-cis-unit content is 97.0 wt % of butadiene and isoprene. Mw = 384000, Mn = 145000, Mw/Mn = 2.65.

Example 8 differs from Example 7 in that isoprene is not used at all, and butadiene (450 kg/h) is fed into the second reactor, and 200 kg/h in the third reactor. Temperature of the polymerization process is 38°C. The monomer conversion is 97 wt %. cis-1,4-Polybutadiene obtained has following characteristics: Mooney viscosity is 47 units, Karrer plasticity is 0.6 units, and the 1,4-cis-unit content is 97.1 wt % of butadiene. Mw = 396000, Mn = 165000, Mw/Mn = 2.4.

Example 9A (control in isoprene) differs from Example 1 in that only isoprene is used as monomer which is fed into the first reactor together with a charge (30 t/h) that is 10 wt % isoprene solution in toluene (3 t/h). Temperature of the polymerization process is 36°C. The monomer conversion is 93 wt %. cis-1,4-Polyisoprene obtained has following characteristics: Mooney viscosity is 78 units, Karrer plasticity is 0.30 units, and the 1,4-cis-unit content is 97.3 wt % of isoprene. The nominal strength on stretching is 28.3 MPa (23°C), the tensile strain is 678%. Mw = 397000, Mn = 84000, Mw/Mn = 4.4.

Example 9 differs from Example 8 in that only isoprene is used, at first, it is fed together with a charge into the first reactor, then (450 kg/h) into the second reactor, and then (200 kg/h) into the third reactor. Temperature of the polymerization process is 36°C. The monomer conversion is 98 wt %. cis-1,4-Polyisoprene obtained has following characteristics: Mooney viscosity is 75 units, Karrer plasticity is 0.38 units, and the 1,4-cis-unit content is 97.5 wt % of isoprene. The nominal strength on stretching is 31.5 MPa, the tensile strain is 800%. Mw = 282000, Mn = 143000, Mw/Mn = 1.97.

Example 10. Unlike the previous Examples on preparation of a catalyst complex the apparatus of 2 M³ in volume, equipped with a stirrer, is charged in a nitrogen atmosphere with didymium trichloride tributyl phosphate complex toluene solution (35 l, 10.5 mol of REE) (Didymium is the mixture of neodymium (72 wt %), lanthanum (15 wt %), praseodymium (8 wt %), cerium (4 wt %), and gadolinum (1 wt %)). (formula of the complex is NdCl3 * 3TBP, where Nd is the basic component of a total lanthanide mixture, including didymium chlorides -- the sum of all aforesaid lanthanides). Then piperylene (10.5 l, 105 mol) and a TIBA toluene solution (1465 l, 315 mol) (containing diisobutylaluminum hydride (27 wt %), TIBDAO (1 wt %), and aluminum metal (0.56 wt %) as the dispersion with the particle size of 5-50 microns) are introduced. Contents of the apparatus is agitated for 20 h. Simultaneously, the maturation of a catalyst complex occurs. The catalyst complex solution having the REE concentration of 0.0070 mol/I is obtained. The ratio of catalyst complex components REE : piperylene : TIBA (containing diisobutylaluminum hydride (27 wt %), TIBDAO (1 wt %), and aluminum metal (0.56 wt %) as the dispersion with the particle size of 5-50 microns) = 1 : 10 : 30.

Butadiene polymerization is carried out in five-polymerizer battery, the charge (20 t/h) containing 5 wt % butadiene concentration (1 t/h of butadiene) is fed into the first downstream reactor of the polymerization battery, where the catalyst complex solution (1600 l/h, 10.5 mol of REE/h) is also added. Thus, monomer portions (33.333% of total monomer introduced and taken for 100%) are fed into the first, second, and third reactors.

Polymerization temperature is 60°C. Then solvent-free monomer (1 t/h) is fed in each of the second and third reactors. The ratio of total monomer (3.0 t/h = 55555.55 mol/h) to REE (10.5 mol of REE/h) ≈ 5291.

Further process proceeds in two subsequent polymerizers of the battery. In the fourth reactor toluene (3 t/h) with temperature -25°C is additionally fed and in the fifth reactor else toluene (5 t/h) with temperature +25°C is fed. Therefore, hydrocarbon solvent entering into the fourth and fifth reactors with temperature from -25°C to +25°C is fed simultaneously, but not together with the monomer entering into the second and third reactors. The monomer conversion in the last apparatus is 94 wt %. Termination of the polymerization process is realized with an antioxidant solution (0.5 wt % of Agidol-2), and water (100 l/h) is fed simultaneously to terminate and wash the polymerizate. Polymerizate then enters in the aqueous degassing step, and the resulted rubber is dried in screw type apparatuses. After isolation and drying properties of polymer were: Mooney viscosity is 45 units, Karrer plasticity is 0.41 units, elastic recovery is 1,62 mm, cold flow is 5.1 mm/h, and the 1,4-cis-unit content is 97.8 wt % . Mw = 357000, Mn = 155000, Mw/Mn = 2.3.

Example 10A. Unlike Example 10, into the third reactor a toluene solvent (1 t/h, 40°C) is fed simultaneously with a monomer, but in a separate inlet point, whereas into the fourth reactor 2 t/h of toluene is fed simultaneously instead of 3 t/h. The monomer conversion in the last apparatus is 93 wt %. After isolation and drying properties of polymer were: Mooney viscosity is 48 units, Karrer plasticity is 0.51 units, and the 1,4-cis-unit content is 97.5 wt % . Mw = 368000, Mn = 147000, Mw/Mn = 2.5. In testing of the vulcanized rubbers obtained from this rubber, the results were: the conventional stress at 300% strain is 12.5 MPa, and the tensile strength is 23.0 MPa.

Instance 10B. Unlike Example 10A the hexane fraction (boiling point 60-80 °C) is used as a solvent. The monomer conversion in the last apparatus is 99 wt %. After isolation and drying, properties of polymer were: Mooney viscosity is 45 units, Karrer plasticity is 0.52 units, and the 1,4-cis-unit content is 97.2 wt % . Mw = 374000, Mn = 144000, Mw/Mn = 2.6. In testing of the vulcanized rubbers obtained from this rubber, the results were: the conventional stress at 300% strain is 12.0 MPa, and tensile strength is 24,0 MPa.

Example 11. Preparation of a catalytic complex based on REE is carried out as in Example 4, the dosage of a catalyst complex fed to the first reactor is 0.21 mol of Nd/100 kg/h of butadiene (based on a total supply of monomer), and the polymerization process is carried out according to the mode of Example 10. Unlike Example 10 6 t/h of toluene with temperature +60°C is simultaneously fed for diluting into the fourth polymerizer, and 2 t/h of toluene with temperature +140°C is fed into the fifth reactor.

The monomer conversion in the last apparatus is 99 wt %. Termination of the polymerization process and polymerizate washing are realized as in Example 6. After isolation and drying properties of polymer were: Mooney viscosity is 45 units, Karrer plasticity is 0.38 units, elastic recovery is 1,70 mm, cold flow is 4.1 mm/h, and the 1,4-cis-unit content is 96.2 wt % . Mw = 462000, Mn = 165000, Mw/Mn = 2.8.

Example 12 differs from Example 11 in that the dosage of a catalyst complex fed into the first reactor is 0.11 mol of Nd/100 kg/h of butadiene (based on a total supply of monomer), and in that an additional TIBA (0.2 mol/h) containing diisobutylaluminum hydride (40 wt % of total aluminum), TIBDAO (0.1 wt %), isobutoxydialkylaluminum (0.7 wt %), and aluminum metal (0.1 wt %) with a particle size from 2 to 40 microns is added to an additional toluene (0.5 t/h, introduced simultaneously, separately from monomer, and in other inlet point) fed into the third reactor. The monomer conversion in the last apparatus is 99 wt %. After isolation and drying polymer has following characteristics: Mooney viscosity is 45 units, Karrer plasticity is 0.58 units, and the 1,4-cis-unit content is 97.0 wt % . Mw = 311000, Mn = 115000, Mw/Mn = 2.7.

Example 13. Unlike the previous Examples 9 and 9A, the butadiene copolymerization with isoprene is carried out in the four-reactor battery. A charge (27 t/h), which is 10 wt % toluene solution of butadiene (2.4 t/h) and isoprene (0.3 t/h), is fed into the first apparatus, then solvent-free butadiene (0.15 t/h) is fed to the second reactor and isoprene (0.15 t/h) is fed into the third reactor. Distribution of total monomers (100%) throughout the apparatuses: the first reactor, butadiene (80%) and isoprene (10%); the second reactor, butadiene (5%); and the third reactor, isoprene (5%). The REE catalyst complex prepared according to Example 4 (407 l/h, 3.7 mol/h of REE) is fed into the first apparatus. The composition of the total monomer mixture is butadiene (85 wt %) and isoprene (15 wt %). The total monomer feed is 3.0 t/h = 55555.55 mol/h. The molar ratio of total monomers : REE = 55555.55 mol/h : 3.7 mol/h of REE = 15015. Temperature of polymerization process is 40°C. The monomer conversion is 97 wt %. Termination of the polymerization process and polimerizate washing is carried out as in Example 1. cis-1,4-Butadiene-isoprene copolymer after isolation and drying has following characteristics: Mooney viscosity is 46 units, and the 1,4-cis-unit content is 97 wt %. Mw = 342500, Mn = 137000, Mw/Mn = 2.5.

Example 14. The same as in Example 13, but unlike the Example 13 isoprene is not used, and the charge (28.5 t/h) containing butadiene (1.5 t/h) (50 wt % of total monomer, the rest is hexane) is fed into the first reactor of the polymerization battery. The residual solvent-free monomer (50 wt %) is introduced into the third polymerizer. Temperature of polymerization process is 60°C. The monomer conversion is 97 wt %. Copolymer properties: Mooney viscosity is 45 units, Karrer plasticity is 0.39 units and the 1,4-cis-unit content is 97.0 wt %. Mw = 323000, Mn = 147000, Mw/Mn = 2.2.

Example 15 differs from Example 14 in that butadiene (2.97 t/h, the rest is toluene) of the charge (29.97 t/h) is fed into the first reactor, and the residual solvent-free portion of (butadiene) monomer (0.03 t/h, 1 wt % of total monomer (3.0 t/h)) is fed into the second reactor. Temperature of polymerization process is 25°C. The monomer conversion is 92 wt %. Mw = 422600, Mn = 152000, Mw/Mn = 2.78.

Example 16 differs_from Example 15 in that the residual solvent-free butadiene portion (0.03 t/h, 1.0 wt % of total monomer) is fed into the third reactor. Temperature of polymerization process is 30°C. The monomer conversion is 94 wt %. Mw = 448000, Mn = 160000, Mw/Mn = 2.8.

Example 17 differs from Example 15 in that monomer (2.94 t/h) is fed into the first polymerizer, and the residual solvent-free butadiene portions (0.03 t/h each, 1.0 wt % of a total amount) are simultaneously fed into the second and third reactors Temperature of polymerization process is 70°C. The monomer conversion is 97 wt %. Mw = 369000, Mn = 142000, Mw/Mn = 2.6.

Example 18 differs from Example 15 in that the residual solvent-free butadiene portions (0.015 t/h each, 0.5 wt % of a total amount) are simultaneously fed into the second and third reactors Temperature of polymerization process is 50°C. The monomer conversion is 95 wt %. Mw = 366000, Mn = 138000, Mw/Mn = 2.65.

Example 19 differs from an Example 15 in that the residual solvent-free butadiene portion (2.97 t/h, 99 wt % of a total amount) is fed into the second reactor Temperature of polymerization process is 60°C. The monomer conversion is 97 wt %. Mw = 378000, Mn = 151000, Mw/Mn = 2.5.

Example 20 differs from Example 15 in that the residual solvent-free butadiene portion (2.97 t/h, 99.0 wt % of a total amount) is fed into the second reactor Temperature of polymerization process is 80°C. The monomer conversion is 98 wt %. Mw = 348000, Mn = 129000, Mw/Mn = 2.7.

Example 21 differs from an Example 20 in that the residual solvent-free butadiene portion (2.97 t/h, 99 wt % of a total amount) is simultaneously fed in equal parts (i.e., 1.485 t/h each, 49.5 wt %) into the second and third reactors Temperature of polymerization process is 35°C. The monomer conversion is 96 wt %. Mw = 380000, Mn = 165000, Mw/Mn = 2.3.

Example 21 A. Unlike Example 21 an additional DIBAH toluene solution (0.001 mol/h) is fed into the second reactor separately from a monomer. The monomer conversion is 97 wt %. Polymer after isolation and drying has following characteristics: Mooney viscosity is 42 units, Karrer plasticity is 0.61 units, and the 1,4-cis-unit content is 97.5 wt %. Mw = 335000, Mn = 124000, Mw/Mn = 2.7. In testing of the vulcanized rubbers obtained from this rubber, the results were: the conventional stress at 300% strain is 10.3 MPa, and the tensile strength is 22.3 MPa.

Example 21B. Unlike an Example 21A an additional toluene solution (1.5 mol/h) of the mixture containing trialkylaluminum (1.0 mol/h) and diisobutylaluminum hydride (0.5 mol/h) (2:1 ratio) and monomer are fed simultaneously into the first reactor. The monomer conversion is 98 wt %. Polymer after isolation and drying has following characteristics: Mooney viscosity is 40 units, Karrer plasticity is 0.62 units, and the 1,4-cis-unit content is 97.0 wt %. Mw = 367000, Mn = 131000, Mw/Mn = 2.8. In testing of the vulcanized rubbers based on this rubber, the results were: the conventional stress at 300% strain is 10.3 MPa, and the tensile strength is 23.1 MPa.

Example 21C. Unlike Example 21A in addition to the catalyst complex, the hexane solution (1.5 mol/h) containing tetraisobutyldialumoxane (TIBDAO) (0.15 mol/h), triethylaluminum (0.9 mol/h), and diethylaluminum hydride (0.45 mol/h) (1 : 6 : 3 ratio) and monomer are fed simultaneously in the second reactor. The monomer conversion is 99 wt %. Polymer after isolation and drying has following characteristics: Mooney viscosity is 41 units, Karrer plasticity is 0.6 units, and the 1,4-cis-unit content is 97.3 wt %. Mw = 370000, Mn = 137000, Mw/Mn = 2.7. In testing of the vulcanized rubbers obtained from this rubber, the results were: the conventional stress at 300% strain is 11.0 MPa, and the tensile strength is 22,5 MPa.

Example 21D. Unlike an Example 21A the triisobutylaluminum toluene solution (10 l/h, C = 0.172 mol/h) containing diisobutylaluminum hydride (45.1 mol % of total aluminum) and isobutyldialumoxane (0.4 mol % of total aluminum) and monomer are fed into the third reactor simultaneously and separately in different inlet points. The monomer conversion in the last apparatus is 97 wt %. Polymer after isolation and drying has following characteristics: Mooney viscosity is 42 units, Karrer plasticity is 0.57 units, and the 1,4-cis-unit content is 97.9 wt %. Mw = 382000, Mn = 147000, Mw/Mn = 2.6. In testing of the vulcanized rubbers obtained from this rubber, the results were: the conventional stress at 300% strain is 12.0 MPa, and the tensile strength is 23.3 MPa.

Example 21E. Unlike Example 21A the polyisobutylalumoxane (PAO) toluene solution (22 l/h, C = 0.072 mol/l) and monomer are fed simultaneously in the third reactor. The monomer conversion in the last apparatus is 96 wt %. Polymer after isolation and drying has following characteristics: Mooney viscosity is 43 units, Karrer plasticity is 0.54 units, and the 1,4-cis-unit content is 97.7 wt %. Mw = 347000, Mn = 124000, Mw/Mn = 2.8. In testing of the vulcanized rubbers obtained from this rubber, the results were: the conventional stress at 300% strain is 10.5 MPa, and the tensile strength is 22.4 MPa.

Example 21 F. Unlike Example 21A the ethylalumoxane toluene solution (15 l/h, C = 0.1 mol/l) and monomer are fed simultaneously in the second reactor. The monomer conversion in the last apparatus is 96 wt %. Polymer after isolation and drying has following characteristics: Mooney viscosity is 43 units, Karrer plasticity is 0.59 units, and the 1,4-cis-unit content is 97.3 wt %. Mw = 351000, Mn = 130000, Mw/Mn = 2.7. In testing of the vulcanized rubbers obtained from this rubber, the results were: the conventional stress at 300% strain is 11.8 MPa, and the tensile strength is 22.2 MPa.

Example 21 G. Unlike Example 21A the DIBAH toluene solution (15 l/h, C = 0.1 mol/h) and monomer are fed into the third reactor simultaneously and separately in different inlet points. The monomer conversion in the last apparatus is 98 wt %. Polymer after isolation and drying has following characteristics: Mooney viscosity is 42 units, Karrer plasticity is 0.61 units, and the 1,4-cis-unit content is 97.7 wt %. Mw = 355000, Mn = 134000, Mw/Mn = 2.65. In testing of the vulcanized rubbers obtained from this rubber, the results were: the conventional stress at 300% strain is 12.0 MPa, and the tensile strength is 23.0 MPa.

Example 21 H. Unlike Example 21A a DIBAH solution is additionally fed into the first reactor. The monomer conversion in the last apparatus is 95 wt %. Polymer after isolation and drying has following characteristics: Mooney viscosity is 41 units, Karrer plasticity is 0.61 units, and the 1,4-cis-unit content is 97.0 wt %. Mw = 343000, Mn = 124700, Mw/Mn = 2.65. In testing of the vulcanized rubbers obtained from this rubber, the results were: the conventional stress at 300% strain is 12.0 MPa, and the tensile strength is 21.3 MPa.

Example 21I. Unlike Example 21A a TIBDAO solution of the same concentration instead of DIBAH is fed into the first reactor. The monomer conversion in the last apparatus is 95 wt %. Polymer after isolation and drying has following characteristics: Mooney viscosity is 46 units, and the 1,4-cis-unit content is 97.9 wt %. Mw = 350000, Mn = 140000, Mw/Mn = 2.5. In testing of the vulcanized rubbers obtained from this rubber, the results were: the conventional stress at 300% strain is 11.8 MPa, and the tensile strength is 23.0 MPa.

Example 21J. Unlike Example 21A a TIBA solution (0.001 mol/h) and monomer are simultaneously fed into the second reactor through the individual inlet point. The monomer conversion in the last apparatus is 95 wt %. After isolation and drying polymer has following characteristics: Mooney viscosity is 48 units, and the 1,4-cis-unit content is 97.0 wt %. Mw = 389000, Mn = 144000, Mw/Mn = 2.7. In testing of the vulcanized rubbers obtained from this rubber, the results were: the conventional stress at 300% strain is 10.9 MPa, and the tensile strength is 22.0 MPa.

Example 21 K. Unlike Example 10 a TIBA toluene solution (1.5 mol/h) and monomer are simultaneously fed into the third reactor. The monomer conversion in the last apparatus is 95 wt %. After isolation and drying polymer has following characteristics: Mooney viscosity is 48 units, and the 1,4-cis-unit content is 97.5 wt %. Mw = 368000, Mn = 147000, Mw/Mn = 2.5. In testing of the vulcanized rubbers obtained from this rubber, the results were: the conventional stress at 300% strain is 12.5 MPa, and the tensile strength is 23.0 MPa.

Example 21L. Unlike Example 21A an additional TIBA solution (2 mol/h) is fed into the first reactor. The monomer conversion in the last apparatus is 94 wt %. After isolation and drying polymer has following characteristics: Mooney viscosity is 47 units, and the 1,4-cis-unit content is 97.2 wt %. Mw = 343000, Mn = 140000, Mw/Mn = 2.45. In testing of the vulcanized rubbers obtained from this rubber, the results were: the conventional stress at 300% strain is 12.5 MPa, and the tensile strength is 23.0 MPa.

Example 22 differs from Example 21 in that the residual solvent-free butadiene portion (2.97 t/h, 99.0 wt % of a total amount) is simultaneously fed into the second and in the third reactors using following distribution: 1.98 t/h (66 wt %) into the second reactor and 0.99 t/h (33 wt %) into the third reactor. Temperature of polymerization process is 40°C. The monomer conversion is 97 wt %. Mw = 330000, Mn = 150000, Mw/Mn = 2.2.

Example 23 differs from Example 2 in that butadiene (0.15 t/h, 5 wt %) is introduced in the charge fed into the first reactor, and the residual solvent-free butadiene portion (2.85 t/h, 95.0 wt % of total amount) is simultaneously fed into the second and third reactors. Distribution of streams is as follows: 1.71 t/h (60 wt % of the additional stream or 57 wt % of the total amount) into the second reactor, and 1.14 t/h (40 wt % of the additional stream) in the third reactor. Temperature of polymerisation process is 40°C. The monomer conversion is 96 wt %. Mw = 304500, Mn = 145000, Mw/Mn = 2.1.

Example 24 differs from Example 23 in that butadiene (0.3 t/h, 10 wt %) is introduced in the charge fed into the first reactor, and the residual solvent-free butadiene portion (2.7 t/h, 90.0 wt % of total amount) is simultaneously fed into the second and third reactors. Distribution of streams is as follows: 1.89 t/h (70 wt % of the additional stream or 63 wt % of the total monomer) into the second reactor, and 0.81 t/h (30 wt % of the additional stream and 27 wt % of total monomer) in the third reactor. Temperature of polymerisation process is 40°C. The monomer conversion is 95 wt %. Mw = 358000, Mn = 149000, Mw/Mn = 2.4.

Example 25 differs from the previous examples in that only 1,3-butadiene is used as monomer. The polymerization process is carried out in a 3-l autoclave. Butadiene (33.3 g), toluene (300 g), and a catalyst complex (0.21 mmol) are charged in the autoclave, then additional butadiene (33.3 g) is added into the reactor after 30 min, and again additional butadiene (33.3 g) is added after 30 min. A solvent (267 g) is introduced into the apparatus after 1 h. The process proceeds for 3 h, then polymerizate is discharged from the reactor and terminated with the mixture of water (100 g) and 0.5% Wingstay L antioxidant. Instead of water the use of alcohols, for example, ethanol, and other compounds having labile hydrogen are assumed. Then polymer is degassed, dried, determined its yield, and studied its microstructure, molecular characteristics.

In order to prepare a catalyst complex, a 2-dm3 apparatus, equipped with a stirrer, is charged in nitrogen atmosphere with lanthanide solution (0.060 l, 16.2 mmol of gadolinum 2-ethylhexanoate). Then with stirring piperylene (0.016 l, 162 mmol) and triisobutylaluminum (TIBA) (1.674 l, 324 mmol) toluene solution (containing diisobutylaluminum hydride (32 wt %), isobutylalumoxane (1.7 wt %), isobutoxydiisobutylaluminum (0.8 wt %), and a dispersion of aluminum metal having a particle size from 2 to 60 microns) and an isobutylaluminum sesquichloride (IBASC) (0.029 l, 40.3 mmol of chlorine) toluene solution are added. The reaction mixture is agitated for 1 h at 25°C. The catalyst complex is obtained, which has a REE concentration of 0.0091 mmol/l. The ratio of the complex components REE : IBASC : piperylene : TIBA = 1 : 2.5 (in chlorine) : 10 : 20 (molar).

As a lanthanide source in preparation of a catalyst complex the following derivatives of rare-earth elements are selectively varied: lanthanum (III) chloride with tributyl phosphate, lanthanum (III) chloride with tris(2-ethylhexyl) phosphate, lanthanum (III) chloride with tetrahydrofuran, lanthanum (III) chloride with isopropanol, lanthanum (III) chloride with pyridine, lanthanum (III) chloride with 2-ethylhexanol, lanthanum (III) chloride with ethanol, praseodymium (III) chloride with tributyl phosphate, praseodymium (III) chloride with tetrahydrofuran, praseodymium (III) chloride with isopropanol, praseodymium (III) chloride with pyridine, praseodymium (III) chloride with 2-ethylhexanol, praseodymium (III) chloride with ethanol, neodymium (III) chloride with tributyl phosphate, neodymium (III) chloride with tris(2-ethylhexyl) phosphate, neodymium (III) chloride with tetrahydrofuran, neodymium (III) chloride with isopropanol, neodymium (III) chloride with pyridine, neodymium (III) chloride with 2-ethylhexanol, neodymium (III) chloride with ethanol, lanthanum (III) bromide with tributyl phosphate, lanthanum (III) bromide with tetrahydrofuran, lanthanum (III) bromide with isopropanol, lanthanum (III) bromide with pyridine, lanthanum (III) bromide with 2-ethylhexanol, lanthanum (III) bromide with ethanol, praseodymium (III) bromide with tributyl phosphate, praseodymium (III) bromide with tetrahydrofuran, praseodymium (III) bromide with isopropanol, praseodymium (III) bromide with pyridine, praseodymium (III) bromide with 2-ethylhexanol, praseodymium (III) bromide with ethanol, neodymium (III) bromide with tributyl phosphate, neodymium (III) bromide with tetrahydrofuran, neodymium (III) bromide with isopropanol, neodymium (III) bromide with pyridine, neodymium (III) bromide with 2-ethylhexanol, and neodymium (III) bromide with ethanol, preferably lanthanum (III) chloride with tributyl phosphate, lanthanum (III) chloride with pyridine, lanthanum (III) chloride with 2-ethylhexanol, praseodymium (III) chloride with tributyl phosphate, praseodymium (III) chloride with 2-ethylhexanol, neodymium (III) chloride with tributyl phosphate, neodymium (III) chloride with tetrahydrofuran, neodymium (III) chloride with 2-ethylhexanol, neodymium (III) chloride with pyridine, neodymium (III) chloride with ethanol, as well as carboxylates:
including: lanthanum (III) propionate, lanthanum (II) diethylacetate, lanthanum (III) 2-ethylhexanoate, lanthanum (III) stearate, lanthanum (III) benzoate, lanthanum (III) cyclohexanecarboxylate, lanthanum (III) oleate, lanthanum (III) versatate, lanthanum (III) naphthenate, praseodymium (III) propionate, praseodymium (III) diethylacetate, praseodymium (III) 2-ethylhexanoate, praseodymium (III) stearate, praseodymium (III) benzoate, praseodymium (III) cyclohexanecarboxylate, praseodymium (III) oleate, praseodymium (III) versatate, praseodymium (III) naphthenate, neodymium (III) propionate, neodymium (III) diethylacetate, neodymium (III) 2-ethylhexanoate, neodymium (III) stearate, neodymium (III) benzoate, neodymium (III) cyclohexanecarboxylate, neodymium (III) oleate, neodymium (III) versatate, and neodymium (III) naphthenate, preferably neodymium (III) 2-ethylhexanoate, neodymium (III) versatate, and neodymium (III) naphthenate, and also rare-earth (III) compositions based on diketonates, including: lanthanum (III) acetylacetonate, praseodymium (III) acetylacetonate, and neodymium (Π1) acetylacetonate, preferably neodymium (III) acetylacetonate.

Other components of a complex were invariable. The temperature of polymerization process was 30-40°C. The monomer conversion in 3 hours was 90-98 %. After isolation and drying polymer has following characteristics: Mooney viscosity is 40-49 units, Karrer plasticity is 0.51-0.61 units, and the 1,4-cis-unit content is 96.7-97.7 wt %. Mw = 355000-358000, Mn = 134000-149000, Mw/Mn = 2.4-2.65.

In testing of the vulcanized rubbers obtained from this rubber, the results were: the conventional stress at 300% strain is 10.2-12.0 MPa, and the tensile strength is 21.0-23.0 MPa.

Example 26 differs from the Example 25 in that following substances are samplingly varied as a source of halogenide-containing compounds in preparation of a catalyst complex:
methylaluminum dibromide, methylaluminum dichloride, ethylaluminum dibromide, ethylaluminum dichloride, butylaluminum dibromide, butylaluminum dichloride, isobutylaluminum dibromide, diisobutylaluminum bromide, isobutylaluminum sesquibromide, isobutylaluminum sesquichloride, dimethylaluminum bromide, dimethylaluminum chloride, diethylaluminum bromide, diethylaluminum chloride, dibutylaluminum chloride, methylaluminum sesquibromide, methylaluminum sesquichloride, ethylaluminum sesquibromide, ethylaluminum sesquichloride, aluminum tribromide, aluminum trichloride, dimethylaluminum fluoride, diethylaluminum fluoride, methylaluminum difluoride, ethylaluminum difluoride, and also halogenides of other elements of Periodic Table: antimony trichloride, antimony pentachloride, phosphorus trichloride, phosphorus pentachloride, tin tetrachloride, titanum tetrachloride, titanum tetrabromide, titanum tetraiodide, the mixed titanum halogenides with chlorine, iodine, and bromine atoms (containing 1-3 atoms of each halogenide), etherates of aluminum chloride, aluminum bromide, boron trifluoride, and titanum tetrachloride, as well as alkyl or aryl mono or polyhalogenides of general formula RXn, where R is C1-C35, X is chlorine, bromine, iodine, and fluorine, and n = 1-6, particularly, benzyl chloride, tert-butyl chloride, ethyl chloride, propyl chloride, isobutyl chloride, chloroform, ethylaluminum sesquichloride, chloroanyl, isobutylaluminum sesquichloride, carbon tetrachloride, 1,2-dichloroethane, dichloromethane, having a R-halogenide-to-lanhanide compound molar ratio within 1:2.5,
or their combinations with OAC, first of all, with triisobutylaluminum or other OAC, listed in the following example.

Other components of a complex were invariable.

The temperature of polymerization process was 23-45°C. The monomer conversion in the last apparatus was 93-98 wt %. After isolation and drying polymer has following characteristics: Mooney viscosity is 40-50 units, Karrer plasticity is 0.45-0.56 units, and the 1,4-cis-unit content is 97.0-98 wt %. Mw = 336000-364000, Mn = 120000-140000, Mw/Mn = 2.6-2.8.

In testing of the vulcanized rubbers obtained from this rubber, the results were: the conventional stress at 300% strain is 9.9-11.2 MPa, and the tensile strength is 21.2-24.0 MPa.

Example 27 differs from Example 25 in that only 1,3-butadiene is used as monomer, and following substances as organometallic compounds are selectively varied in preparation of a catalyst complex: trimethylaluminum, triethylaluminum, tri-n-butylaluminum, triisobutylaluminum, tri-n-propylaluminum, triisopropylaluminum, tripentylaluminum, tri-n-hexylaluminum, tri-n-octylaluminum, tricyclohexylaluminum, triphenylaluminum, tri-p-tolylaluminum, tribenzylaluminum, diethylphenylaluminum, diethyl-o-tolylaluminum, diethylbenzylaluminum, ethyldiphenylaluminum, ethyldi-p-tolylaluminum, ethyldibenzylaluminum, diethylaluminum hydride, di-n-propylaluminum hydride, diisopropylaluminum hydride, di-n-butylaluminum hydride, diisobutylaluminum hydride, di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutyl-aluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride, ethylaluminum dihydride, n-propylaluminum dihydride, isopropylaluminum dihydride, n-butylaluminum dihydride, isobutylaluminum dihydride, n-octylaluminum dihydride, as well
dimethylaluminum methoxide, diethylaluminum methoxide, diisobutylaluminum methoxide, dimethylaluminum ethoxide, diethylaluminum ethoxide, diisobutylaluminum ethoxide, dimethylaluminum phenoxide, diethylaluminum phenoxide, diisobutylaluminum phenoxide, methylaluminum dimethoxide, ethylaluminum dimethoxide, isobutylaluminum dimethoxide, methylaluminum diethoxide, ethylaluminum diethoxide, isobutylaluminum diethoxide, methylaluminum diphenoxide, ethylaluminum diphenoxide, isobutylaluminum diphenoxide, and their mixtures.

Besides hydrocarbons represented in examples above, suitable hydrocarbons as solvents can include: linear and branched, aliphatic and cyclic, saturated or unsaturated or aromatic hydrocarbons, for example, C5-C35 alkanes, such as n-pentane, isopentane, cyclopentane, n-hexane, isohexane, cyclohexane, n-heptane, isoheptane, n-octane, isooctane, nonane, decane or undecane; C5-C35 alkenes, such as pentenes, cyclopentenes, hexene, cyclohexene, heptene, octene, nonene, decene, or undecene; as well unconjugated dienes, such as 1,4-pentadiene, hexadiene, cyclohexadiene, heptadiene, octadienes or octatrienes, nonadienes or nonatrienes; or aromatic hydrocarbons, such as benzene, toluene, xylene.

Other components of a complex were invariable.

The temperature of polymerization process was 25-60°C. The monomer conversion in 3 hours was 92-98 wt %. After isolation and drying polymer has following characteristics: Mooney viscosity is 40-45 units, Karrer plasticity is 0.56-0.63 units, and the 1,4-cis-unit content is 97.0-98 wt %. Mw = 280000-371000, Mn = 112000-130000, Mw/Mn = 2.5-2.85.

In testing of the vulcanized rubbers obtained from this rubber, the results were: the conventional stress at 300% strain is 9.9-11.2 MPa, and the tensile strength is 21.2-24.0 MPa.

cis-1,4-Polybutadiene (Examples 1-3, 8, 10-12, 14-27), cis-1,4-polyisoprene (Examples 9 and 9A), and cis-1,4-butadiene-isoprene copolymer (Examples 4-7, 13) were used to prepare compounded rubber and vulcanized rubber from them (USSR state standard 19.920-19-74) and were tested according to USSR state standards 270-75 and 14925-79 (CMEA standard 802-77). The testing data are additionally represented in Tables 1 and 2.

The similar positive results were also obtained with all rare-earth elements, OAC, solvents and dienes listed in the preamble of the present application.

Table 2 also explains the given method.

Therefore, Examples 1-27 have shown that the present method enabled to give 1,4-cis-polybutadiene, 1,4-cis-polyisoprene, and 1,4-cis-copolymer of butadiene with isoprene under the action of catalysts based on rare-earth compounds, which polymers have a narrow MWD and high physical-mechanical parameters of vulcanized rubber.

Further, following Examples show opportunity to increase additionally a catalyst efficiency and create additional factors to control molecular characteristics of cis-1,4-diene rubber.

This is attained by that OAC additionally contain, simultaneously or in various combinations, tetraisobutylalumoxane, polyalumoxane, isobutoxydialkylaluminum, aluminum metal dispersion, aluminum hydrides, and hydrogen, besides trialkylaluminum and dialkylaluminum hydride.

Example 28. Under conditions of Example 2, the TIBA solution containing additionally aluminum hydrides (3.7 wt % based on TIBA) was used in preparation of a catalyst complex. Dosage of the catalyst complex fed into the first reactor decreases from 0.123 to 0.1 mol of Nd/100 kg/h of butadiene. The ratio of complex components REE : IBASC : piperylene : TIBA = 1 : 1.0 (in chlorine) : 10 : 10 (molar). In preparation of the catalyst the toluene-hexane fraction mixture is used as a solvent. A Nefras solvent (hexane analog) is used in polymerization. The monomer conversion in the third polymerizer is 98 wt %. The polymerization process is terminated with an antioxidant solution (0.5 wt % of Agidol-2). Polymerizate (1) is washed with partially softened water (0.001) in the ratio 1 : 0.001. After isolation and drying polymer has following characteristics: Mooney viscosity is 42 units, Karrer plasticity is 0.51 units, and the 1,4-cis-unit content is 97.3 wt %, and cold flow is 23 mm/h, Mw = 283000, Mn = 123000, Mw/Mn = 2.3. Strength characteristics of polymer are given in Table 3.

Example 29. Under conditions of Example 2, the TIBA solution containing additionally aluminum hydrides (0.01 wt % based on TIBA) was used in preparation of a catalyst complex. The ratio of complex components REE : IBASC : butadiene : TIBA = 1 : 1.5 (in chlorine) : 20 : 10 (molar). In preparation of the catalyst the toluene is used as a solvent. The monomer conversion in the fourth polymerizer is 99 wt %. The polymerization process is terminated with an antioxidant solution (0.5 wt % of Irganox 1010). Polymerizate is washed with partially softened water using the ratio 1 : 0.01. After isolation and drying polymer has following characteristics: Mooney viscosity is 44 units, Karrer plasticity is 0.52 units, and the 1,4-cis-unit content is 97.5 wt %. Mw = 333000, Mn = 133000, Mw/Mn = 2.5. Strength characteristics of polymer are given in Table 3.

Example 30. Under conditions of Example 2, the TIBA solution containing additionally hydrogen gas (0.01 wt % based on TIBA) was used in preparation of a catalyst complex. The ratio of complex components REE : IBASC : butadiene : TIBA = 1 : 1.5 (in chlorine) : 20 : 8 (molar). In preparation of the catalyst the toluene-hexane fraction mixture is used as a solvent. A Nefras solvent is used in polymerization. The monomer conversion in the third polymerizer is 99 wt %. The polymerization process is terminated with an antioxidant solution (0.4 wt % of Irganox 1076) and deionized water using the 1 : 0.01 ratio, i. e., stopping and washing operations are combined as a single step.

After isolation and drying polymer has following characteristics: Mooney viscosity is 42 units, Karrer plasticity is 0.51 units, and the 1,4-cis-unit content is 97.3 wt %. Mw = 313600, Mn = 128000, Mw/Mn = 2.45. Strength characteristics of polymer are given in Table 3.

Example 31. Under conditions of Example 2, the TIBA solution containing additionally hydrogen gas (10 wt % based on TIBA) was used in preparation of a catalyst complex. The ratio of complex components REE : IBASC : butadiene : TIBA = 1 : 1.7 (in chlorine) : 20 : 7 (molar). In preparation of the catalyst the toluene-hexane fraction mixture is used as a solvent. A Nefras solvent is used in polymerization. The monomer conversion in the third polymerizer is 97 wt %. The polymerization process is terminated with an antioxidant solution (0.6 wt % of Naugard RM 51) and desalted water using the 1 : 0.1 ratio, i. e., stopping and washing operations are combined as a single step.

After isolation and drying polymer has following characteristics: Mooney viscosity is 38 units, Karrer plasticity is 0.55 units, and the 1,4-cis-unit content is 98.1 wt %. Mw = 227000, Mn = 108000, Mw/Mn = 2.1. Strength characteristics of polymer are given in Table 3.

Example 32. Under conditions of Example 2, the TIBA solution containing additionally hydrogen gas and aluminum hydrides (5 and 2.9 wt %, respectively, based on TIBA) was used in preparation of a catalyst complex.

The ratio of complex components REE : IBASC : butadiene : TIBA = 1 : 1.3 (in chlorine) : 15 : 7 (molar). In preparation of the catalyst the toluene-hexane fraction mixture is used as a solvent. Dosage of the catalyst complex fed into the first reactor decreases from 0.123 to 0.1 mol of Nd/100 kg/h of butadiene. A Nefras solvent is used in polymerization. The monomer conversion in the fourth polymerizer is 99 wt %. The polymerization process is terminated with desalted water using the 1 : 0.01 ratio, polimerizate is charged with an antioxidant solution (0.4 wt % of Naftonox based on rubber) and, i. e., stopping and washing operations are combined as a single step.

After isolation and drying polymer has following characteristics: Mooney viscosity is 38 units, Karrer plasticity is 0.54 units, and the 1,4-cis-unit content is 98.3 wt %. Mw = 220000, Mn = 110000, Mw/Mn = 2.0. Strength characteristics of polymer are given in Table 3.

Example 33. Under conditions of Example 12 a catalyst complex is prepared batchwise, alternately in two apparatuses, using small deficiency of OAC. The ratio of components of a complex REE : IBASC : piperylene : TIBA =1 : 1.7 (in chlorine): 20 : 6 (molar). Triisobutylaluminum (TIBA), containing diisobutylaluminum hydride (40 wt % of total aluminum), TIBDAO (0.1 wt %), isobutoxydialkylaluminum (0.7 wt %), and aluminum metal (0.1 wt %) having a particle size of 2-40 microns, are used as OAC. Then the catalyst is continuously fed into the first downstream polymerizer. The residual portion of TIBA (0.2 mol/h) is additionally fed into the third reactor. The same TIBA solution but containing additionally hydrogen gas (3.0 wt %) and aluminum hydrides (2.9 wt % of TIBA weight (based on 100%) is used. The maximum activity of a catalyst complex is attained when an additional OAC (TIBA) is fed into the third reactor. In this case the final OAC composition used to prepare the catalyst complex fed into the first and third reactors is: a TIBA toluene solution containing diisobutylaluminum hydride (32 wt %), TIBDAO (2 wt %), aluminum metal dispersion having a particle size of 5-150 microns (1.07 wt %), as well a hydrogen gas (5 wt %) and aluminum hydrides (2.9 wt % based on TIBA).

Nefras (analog of hexane fraction) is used as a solvent. The dosage of the catalyst complex fed into the first reactor decreases down to 0.08 mol of Nd/100 kg/h of butadiene owing to use of regulating additives. The monomer conversion in the third polymerizer is 98 wt %. The polymerization process is terminated with a Wingstay L antioxidant (0,4 wt %) and a steam condensate using the 1 : 0.04 ratio to wash polimerizate.

After isolation and drying polymer has following characteristics: Mooney viscosity is 40 units, Karrer plasticity is 0.5 units, and the 1,4-cis-unit content is 98.0 wt %. Mw = 221000, Mn = 105200, Mw/Mn = 2.1. Strength characteristics of polymer are given in Table 3. This method is also explained in Table 3.

Therefore, it is additionally shown in Examples 28-33, that the present method uses a new catalyst based on rare-earth elements, which enables to prepare polymers and copolymers of conjugated dienes, in particular, 1,4-cis-polybutadiene, 1,4-cis-polyisoprene, and cis-1,4-copolymer of butadiene with isoprene, which have the narrow MWD and high physical-mechanical parameters of vulcanized rubber.

When additives to OAC fed into the second and third reactors, as well as an amount of components, are varied, molecular characteristics of rubber can be additionally controlled.

In other words, this invention also shows opportunities to control molecular characteristics of rubber owing to both the distribution of streams of monomers and solvents and the change in dosage and composition of a catalyst complex by introduction into the basic OAC portion (trialkylaluminum, for example, TIBA, and diisobutylaluminum hydride, DIBAH), in various combinations, of the various additives chosen from the group comprising:
- tetraisobutyldialumoxane (TIBDAO) (0.1 wt %, 2 wt % based on TIBA and 14.1 mol % of total aluminum of OAC) (Examples 2, 4, 12, 28-33);
- aluminum metal as the dispersion having a particle size of 5-150 microns; 1.07 wt % based on TIBA (Examples 2, 28-33);
- aluminum metal as the evenly distributed dispersion with particle size of 2-20 microns; 0,3 wt % based on TIBA (Example 4);
- hydrogen gas (0.01 wt % based on TIBA (Example 30);
- hydrogen gas (10 wt % based on TIBA (Example 31);
- hydrogen gas (5 wt % based on TIBA, as well aluminum hydrides (2.9 wt % based on TIBA (Example 32);
- hydrogen (3.0 wt %, as well aluminum hydrides (2.9 wt % based on TIBA (100% basis);
- aluminum hydrides (0.7 wt % based on TIBA) (Example 28);
- aluminum hydrides (0.01 wt % based on TIBA) (Example 29);
- isobutoxydialkylaluminum (0.7 wt % based on TIBA) (Example 12);
- polyisobutylalumoxane (PAO); 1.58 mol/h when the TIBA feed is 2.75 mol/h (Example 21D);
- polyisobutylalumoxane (PAO); 1.58 mol/h when the TIBA feed is 2.75 mol/h (Example 21 D);
- ethylalumoxane (1.5 mol/h when the TIBA feed is 2.75 mol/h (Example 21 E).

Moreover, the presented Examples prove the preparation of cis-1,4-diene rubber that is either homopolymer, or copolymer of conjugated dienes with the high cis-1,4-unit content (up to 98.3%) and the narrow molecular weight distribution providing high strength parameters.

Properties of 1,4-cis-polybutadienes, 1,4-cis-polyisoprenes, and cis-1,4-copolymers of butadiene with isoprene and physical-mechanical parameters of their vulcanized rubbers.

**Table 1.**

| Parameters | SKD-6 (prototype), Example 1 | cis-1,4-polybutadiene, Example 22 | cis-1,4-polyisoprene, Example 9 | cis-1,4-copolymer of butadiene with isoprene, Example 11 |
|---|---|---|---|---|
| Mooney viscosity 1+4 (100°C), units | 45 | 43 | 75 | 46 |
| Karrer plasticity, units | 0,61 | 0,59 | 0,38 | 0,42 |
| Elastic recovery, mm | 0,67 | 0,89 | 1,80 | 1,58 |
| Cold flow, mm/h | 27,9 | 24,8 | 0 | 5,5 |
| Vulcanized rubbers: stress at 300% strain, MPa | 9,0 | 12,5 | 17,8 | 15,6 |
| Tensile strength, MPa | 19,2 | 25,2 | 31,5 | 26,0 |
| Failure elongation, % | 526 | 570 | 800 | 640 |
| Relative residual elongation, % | 12 | 12 | - | 12 |

Polymerization of butadiene and isoprene and copolymerization of butadiene with isoprene under the action of the catalysts based on REE (summary table)

**Table 2.**

| Example | Distribution by monomer types and reactors of polymerization battery, wt % | | | Mooney viscosity, units | Molecular characteristics | | | Stress at 300% strain, MPa | cis-1,4-unit content, wt % |
|---|---|---|---|---|---|---|---|---|---|
| | | | | | M_{w} ●10³ | Mₙ ●10³ | M_{w}/ ●Mₙ | | |
| | Charge into first reactor | Solvent-free monomer | | | | | | | |
| | | II | III | | | | | | |
| 1 | 2 | 3 | 4 | 5 | 6 | 7 | 8 | 9 | 10 |
| 1 comparative | 100 BD | - | - | 45 | 439 | 122 | 3,6 | 9,0 | 95,0 |
| 2 | 10,0 BD | 50,0 BD | 40,0 BD | 47 | 341 | 131 | 2,6 | 10,3 | 97,2 |
| 3 | 90,0 BD | 10,0 BD | - | 44 | 378 | 135 | 2,8 | 10,2 | 97,0 |
| 4 | 99,0 BD | - | 1,0 IP | 44 | 351 | 130 | 2,7 | 10,5 | 96,4 |
| 5 | 66,7 BD | 13,3 IP | 20,0 BD | 47 | 388 | 155 | 2,5 | 14,1 | 95,8 |
| 6 | 66,7 BD | 18,3 BD | 15,0 IP | 47 | 306 | 133 | 2,3 | 13,4 | 97,1 |
| 7A (k) | 11,7 IP 88,3 BD | - | - | 54 | 379 | 99,5 | 3,8 | 11,1 | 97,1 |
| 7 | 11,6 IP 66,7 BD | 15,0 BD | 6,7 BD | 44 | 384 | 145 | 2,65 | 14,8 | 97,0 |
| 8 | 78,3 BD | 15,0 BD | 6,7 BD | 47 | 396 | 165 | 2,4 | 15,1 | 97,1 |
| 9A (k) | 100,0 IP | - | - | 78 | 397 | 84 | 4,4 | 16,0 | 97,3 |
| 9 | 78,3 IP | 15,0 IP | 6,7 IP | 75 | 282 | 143 | 1,97 | 17,8 | 97,5 |
| 10 | 33,3 BD | 33,3 BD | 33,3 BD | 45 | 357 | 155 | 2,3 | 14,4 | 97,8 |
| 11 | 33,3 BD | 33,3 BD | 33,3 BD | 45 | 462 | 165 | 2,8 | 12,7 | 96,2 |
| 12 | 33,3 BD | 33,3 BD | 33,3 BD | 45 | 311 | 115 | 2,7 | 10,1 | 97,0 |
| 13 | 80 BD 10 IP | 5,0 BD | 5,0 IP | 46 | 343 | 137 | 2,5 | 15,6 | 97,0 |
| 14 | 50,0 BD | - | 50,0 BD | 45 | 323 | 147 | 2,2 | 14,5 | 97,0 |
| 15 | 99,0 BD | 1,0 BD | - | 51 | 423 | 152 | 2,78 | 11,7 | 98,0 |
| 16 | 99,0 BD | - | 1,0 BD | 52 | 448 | 160 | 2,8 | 11,6 | 97,5 |
| 17 | 98,0 BD | 1,0 BD | 1,0 BD | 47 | 369 | 142 | 2.6 | 11,7 | 96,8 |
| 18 | 99,0 BD | 0,5 BD | 0,5 BD | 44 | 366 | 138 | 2,65 | 11,9 | 97,1 |
| 19 | 11,0 BD | 99,0 BD | - | 47 | 378 | 151 | 2,5 | 12,2 | 96,9 |
| 20 | 1,0 BD | BD - | 99,0 BD | 41 | 348 | 129 | 2,7 | 11,8 | 97,0 |
| 21 | 1,0 BD | 49,5 BD | 49,5 BD | 52 | 380 | 165 | 2,3 | 12,7 | 98,2 |
| 22 | 1,0 BD | 66,0 BD | 33,0 BD | 43 | 330 | 150 | 2,2 | 12,5 | 97,5 |
| 23 | 5,0 BD | 57,0 BD | 38,0 BD | 42 | 305 | 145 | 2,1 | 14,0 | 97,5 |
| 24 | 10,0 BD | 63,0 BD | 27,0 BD | 44 | 358 | 149 | 2,4 | 13,8 | 97,5 |

| | | | | | | | | | |
|---|---|---|---|---|---|---|---|---|---|
| Note: 1) BD or B is butadiene, IP or I is isoprene; 2) Stress at 300% strain is the parameter obtained in testing standard vulcanized rubbers based on 1,4-cis-polybutadiene, 1,4-cis-polyisoprene, and cis-1,4-copolymer of butadiene with isoprene. | | | | | | | | | |

Properties of 1,4-cis-diene rubbers and physical-mechanical parameters of their vulcanized rubbers.

**Table 3.**

| | Example number | | | | | |
|---|---|---|---|---|---|---|
| | 28 | 29 | 30 | 31 | 32 | 33 |
| Mooney viscosity 1 +4 (100°C), units | 45 | 44 | 42 | 43 | 38 | 40 |
| Karrer plasticity, units | 0,61 | 0,52 | 0,51 | 0,59 | 0,54 | 0,5 |
| Elastic recovery, mm | 0,67 | 1,3 | 1,1 | 0,89 | 1,00 | 0,8 |
| Cold flow, mm/h | 27,9 | 17,0 | 18,0 | 24,8 | 30,0 | 25,5 |
| Vulcanized rubbers: stress at 300% strain, MPa | 9,0 | 15,0 | 13,5 | 12,5 | 12,8 | 13,6 |
| Tensile strength, MPa | 19,2 | 24,3 | 23,2 | 24,2 | 21,5 | 22,0 |
| Failure elongation, % | 526 | 620 | 583 | 570 | 600 | 650 |
| Relative residual elongation, % | 12 | 12 | 12 | 12 | 12 | 11 |

## Claims

1. The method for preparation of cis-1,4-diene rubber by (co)polymerizing diene monomer(s) in a hydrocarbon solvent in the battery of at least three successive reactors using as the catalyst the Ziegler-Natta catalyst complex prepared by interacting hydrocarbon solutions of rare-earth element (REE) compounds of lanthanide series having an atomic number 57-71 of Periodic Table, conjugated diene compound, halide-containing compound (HC), and organoaluminum compounds (OAC), including OAC containing hydrides of OAC, followed by stopping, washing, degassing, and drying of polymer, which method differs in that a catalytic complex forms continuously or batchwise, using OAC, containing a fine dispersion of aluminum metal, and, simultaneously, in a different combinations, the compounds chosen from the group: polyalkylalumoxanes, aluminum hydrides, and hydrogen, allowing one to control molecular characteristics of a main product; butadiene, isoprene or their mixtures are used as diene monomer(s) during polymerization, and a diene monomer or their mixtures are fed jointly or separately and portionwise; the catalyst is fed into only the first downstream reactor, and 1-99 wt % of total diene monomer(s), first of all, are fed into the first downstream reactor as a solution in a hydrocarbon solvent (a charge), and then 1-99 wt % of residual diene monomer(s) or their mixtures, based on total monomer(s) charged, are fed into the second and third reactors, and monomer(s) are fed either simultaneously in the both, second and third, reactors or successively into each of the second and third reactors.

2. The method according to claim 1, wherein a solution of triisobutylaluminum or diisobutylaluminum hydride or tetraisobutyldialumoxane or their mixtures is fed simultaneously with diene monomer(s) into the first, second or third reactor.

3. The method according to claim 1, wherein a hydrocarbon solvent having temperature from - 25 to + 140°C is fed simultaneously but separately from monomer into the third or successive reactors.

4. The catalyst of diene (co)polymerization for preparation of cis-1,4-diene rubber in a hydrocarbon solvent, which catalyst is the Ziegler-Natta catalytic complex prepared by interacting hydrocarbon solutions of compounds based on rare-earth (REE) elements of lanthanide series with an atomic number 57-71 of Periodic Table, conjugated diene compound, halide-containing compound (HC), and organoaluminum compounds (OAC), including OAC containing hydrides of OAC, differing in that the catalyst complex forms continuously or batchwise, using OAC, containing a fine dispersion of aluminum metal, and, simultaneously, in a different combinations, the compounds chosen from the group: polyalkylalumoxanes, aluminum hydrides, and hydrogen, allowing one to control molecular characteristics of a main product.

## Patentansprüche

1. Verfahren zur Herstellung von cis-1,4-Dien-Kautschuk, der durch (Co)polymerisieren von Dienmonomer(en) in einem Kohlenwasserstofflösungsmittel in der Batterie von wenigstens drei aufeinanderfolgenden Reaktoren unter Verwendung als Katalysator des Ziegler-Natta-Katalysator-Komplexes durch Wechselwirkung kohlenwasserstoffhaltiger Lösungen von Verbindungen der Seltenerdelementen (SEE) der Lanthanoidreihe mit einer Atomzahl von 57 bis 71 des Periodensystems, konjugierten Dienverbindung, Halogenid enthaltende Verbindung (HV), und Organoaluminium-Verbindungen (OAV) einschließlich OAV enthaltenden Hydride der OAV, gefolgt von Anhalten, Waschen, Entgasen und Trocknen des Polymers, wobei sich das Verfahren dadurch unterscheidet, dass die Bildung des Katalysator-Komplexes kontinuierlich oder diskontinuierlich ist, unter Verwendung von OAV, die eine feine Dispersion von metallischem Aluminium enthalten, und gleichzeitig die Verbindungen, ausgewählt aus der Gruppe: Polyalkylalumoxane, Aluminiumhydride und Wasserstoff, in unterschiedlichen Kombinationen, wodurch bis die molekularen Eigenschaften des Hauptproduktes gesteuert werden können; Butadien, Isopren oder deren Mischungen werden als Dien-Monomer(en) während der Polymerisation verwendet und ein Dien-Monomer oder deren Gemische werden gemeinsam oder separat und portionsweise eingespeist; der Katalysator wird nur in dem ersten nachgeschalteten Reaktor zugeführt, und 1-99 Gew.% der gesamten Dien-Monomer(en) werden als erste von allen in den ersten nachgeschalteten Reaktor als Lösung in einem Kohlenwasserstofflösungsmittel zugeführt (eine Ladung ), und dann 1 bis 99 Gew.% restlicher Dien-Monomer(en) oder deren Mischungen, berechnet auf das Gesamtgewicht der Monomere(n), werden in den zweiten und dritten Reaktor zugeführt, und die Monomer(en) werden entweder gleichzeitig in den beiden Reaktoren, den zweiten und den dritten, eingespeist, oder nacheinander in den zweiten und den dritten Reaktor eingespeist.

2. Verfahren nach Anspruch 1, wobei eine Lösung von Triisobutylaluminium oder Diisobutylaluminiumhydrid oder Tetraisobutyldialumoxane oder deren Mischungen gleichzeitig mit Dien-Monomer(en) in den ersten, zweiten oder dritten Reaktor zugeführt wird.

3. Verfahren nach Anspruch 1, wobei ein Kohlenwasserstofflösungsmittel mit einer Temperatur von - 25 bis + 140 ° C gleichzeitig, jedoch getrennt von dem Monomer, in den dritten Reaktor oder in den nachfolgenden Reaktoren zugeführt wird.

4. Der Katalysator für die Dien-(Co)polymerisation zur Herstellung von cis-1,4-Dien-Kautschuk in einem Kohlenwasserstofflösungsmittel, wobei dieser Katalysator das Ziegler-Natta-Katalysator-Komplex ist, hergestellt durch Wechselwirkung kohlenwasserstoffhaltiger Lösungen von Verbindungen der Seltenerdelementen (SEE) der Lanthanoidreihe mit einer Atomzahl von 57 bis 71 des Periodensystems, konjugierten Dienverbindung, Halogenid enthaltende Verbindung (HV), und Organoaluminium-Verbindungen (OAV) einschließlich OAV enthaltenden Hydride der OAV, unterschieden dadurch, dass die Bildung des Katalysator-Komplexes kontinuierlich oder diskontinuierlich ist, unter Verwendung von OAV, die eine feine Dispersion von metallischem Aluminium enthalten, und gleichzeitig die Verbindungen ausgewählt aus der Gruppe: Polyalkylalumoxane, Aluminiumhydride, und Wasserstoff in unterschiedlichen Kombinationen, wodurch bis die molekularen Eigenschaften des Hauptproduktes gesteuert werden können.

## Revendications

1. Procédé de préparation de caoutchouc cis-1,4-dienique par (co)polymérisation de monomère(s) diénique dans un solvant hydrocarboné dans une batterie composée d'au moins trois réacteurs successifs en utilisant en tant que catalyseur un complexe catalytique du type Ziegler-Natta préparé à partir de l'interaction des solutions hydrocarbonés du composé d'éléments de terre rares (REE) de la série des lanthanides dont le numéro atomique du Tableau périodique des éléments est 57-71, des composés de diènes conjugués, des composés comprenant des halogénures (HC), et des composés organiques de l'aluminium (CAO), comprenant des CAO qui contiennent des hydrides de CAO, suivi par arrêt, lavage, dégazage, et séchage du polymère obtenu, lequel procédé se distingue en ce qu'il s'y forme un complexe catalytique en continu ou en discontinu, en utilisant des CAO, qui contiennent une dispersion fine du métal aluminium, et en même temps, en combinaisons différentes, où les composes sont choisis parmi le groupe : polyalakylalumoxanes, hydrures d'aluminium, et hydrogène, ce qui permet de contrôler les caractéristiques moléculaires du produit principal ; le butadiène, l'isoprène ou leurs mélanges sont utilisés en tant que monomère(s) diéniques pendant la polymérisation, et un monomère diénique ou leurs mélanges sont introduits conjointement ou séparément et en portions ; le catalyseur est introduit uniquement dans le premier réacteur en aval, et au début 1-99% en poids du total des monomère(s) diéniques sont introduits dans le premier réacteur en aval en tant que solution dans un solvant hydrocarburé (une charge), et après 1-99% en poids du monomère(s) diénique résiduel ou leurs mélanges, basés sur le total des monomères chargés, sont introduits dans le second et le troisième réacteur, et les monomère(s) sont introduits soit à la fois dans les deux, le deuxième et le troisième des réacteurs soit successivement dans chacun des deuxième et troisième des réacteurs.

2. Procède selon la revendication 1, dans lequel une solution de triisobutylaluminium ou d'hydrure de diisobutylaluminium ou du tetraisobutyldialumoxane ou leurs mélanges est introduite simultanément avec des monomère(s) diéniques dans le premier, le deuxième ou le troisième des réacteurs.

3. Procède selon la revendication 1, dans lequel un solvant hydrocarburé dont la température est de - 25 à + 140°C est introduit simultanément mais séparément du monomère dans le troisième ou les réacteurs successifs.

4. Catalyseur de (co)polymérisation diénique pour la préparation de caoutchouc cis-1,4-dienique dans un solvant hydrocarburé, où le catalyseur est un complexe catalytique du type Ziegler-Natta préparé à partir de l'interaction des solutions hydrocarbonés du composé d'éléments de terre rares (REE) de la série des lanthanides dont le numéro atomique du Tableau périodique des éléments est 57-71, des composés de diènes conjugués, des composés comprenant des halogénures (HC), et des composés organiques de l'aluminium (CAO), comprenant des CAO qui contiennent des hydrides de CAO, qui se distingue en ce qu'il se forme un complexe catalytique en continu ou en discontinu, en utilisant des CAO, qui contiennent une dispersion fine du métal aluminium, et en même temps, en combinaisons différentes, où les composes sont choisis parmi le groupe : polyalakylalumoxanes, hydrures d'aluminium, et hydrogène, ce qui permet de contrôler les caractéristiques moléculaires du produit principal.
